# EUROPEAN PATENT APPLICATION

(11) **EP 0 730 059 A2**
(43) Date of publication of application: **04.09.1996**
(21) Application number: 96102625.9
(22) Date of filing: 21.02.1996
(51) Int. Cl.: D06N 3/00, B32B 27/12

(54) **Method for improving fabrics made of natural or synthetic fibers, and textile material obtained with the method**

(30) Priority: 03.03.1995 IT MI950424
(71) Applicant: Stellini, Renzo, 20020 Vanzaghello (Milano) (IT)
(72) Inventor: Stellini, Renzo, 20020 Vanzaghello (Milano) (IT)
(74) Representative: Modiano, Guido, Dr.-Ing.

(57) **Abstract**

A method for improving fabrics made of natural or synthetic fibers, which consists in applying a film (2) of transparent thermoplastic material to one side of a fabric (1). The application is performed with heat, at a temperature that is adapted to achieve the partial softening of the film (2), and by pressing the film (2) against the fabric (1) to cause a penetration of the film (2) into the meshes of the fabric (1) that makes the applied film (2) substantially invisible.

## Description

The present invention relates to a method for improving fabrics made of natural or synthetic fibers and to a textile material obtained with the method, particularly adapted for mattresses, furniture, or coverings in general.

It is known that conventional types of fabrics, particularly fabrics produced with low-quality thread, are subjected, after weaving, to a finishing process on one of the two sides to achieve better mechanical strength of the fabric and improve its overall aesthetic appearance.

One of the finishing techniques currently used consists in spreading on one side of the fabric one or more vinyl resins, adequately diluted so as to allow the most uniform possible spreading, and in drying the fabric before finally rolling it up on reels or rolls.

With this finishing technique a practically waterproof fabric is obtained, since the vinyl resins, by penetrating the fabric, substantially close completely the gaps between the fibers.

Although this finishing technique significantly improves the appearance and the mechanical characteristics of the fabric, it has some drawbacks.

Although particular attention is paid to achieve uniform spreading of the resins on the fabric, this spreading technique, due to the very structure of the fabric, in fact results in an uneven distribution of the resins, causing resin accumulations between the meshes of the fabric and a reduced deposition at the weft and warp threads.

Accordingly, an excessive fabric stiffening effect is noted, resulting in a scarcely pleasant tactile feeling, without achieving substantial advantages as regards resistance to concentrated loads or to perforation.

The fabric characteristics treated with the spreading technique furthermore alter in the course of time, since the resin hardens further, after drying, stiffening the fabric more and more.

Another drawback that can be observed in fabrics treated with the spreading technique is that they have a limited resistance to fraying at the edges.

In addition to these problems, the spreading technique is intrinsically complicated and entails relatively high costs both in terms of initial investment and of operation.

In some fields of application of fabrics, such as for example in the manufacture of mattresses, the fabrics must have good fire-retardant characteristics. In order to meet this requirement, fabrics used in this field are currently subjected to a particular treatment by means of substances which, in some cases, for example in contact with liquids, can release vapors harmful to the health.

A principal aim of the present invention is to solve the above-mentioned problems by providing a method that allows to obtain a textile material with excellent mechanical strength and with a pleasant aesthetic effect even though it is obtained with low-quality threads.

An object of the invention is to provide a method that allows to obtain, if required, a textile material having excellent fire-resistant characteristics without being impregnated with soluble or volatile substances.

Another object of the invention is to provide a textile material with good resistance to fraying at the edges.

According to the preferred aspect of the invention, a method for improving fabrics made of natural or synthetic fibers is provided, which is characterized in that it consists in applying a film of transparent thermoplastic material to one side of the fabric, such that the application is performed with heat, at a temperature that is adapted to achieve the partial softening of the film, and pressing the film against the fabric to cause a penetration of the film into the meshes of the fabric, thus making the film applied to the fabric substantially invisible.

The textile material obtained with a method according to the invention is characterized in that it comprises a layer of fabric made of natural or synthetic fibers and at least one film-like layer made of transparent thermoplastic material that is applied to one side of the layer of fabric, such that the layer of thermoplastic material is at least partially diffused in the fibers of the layer of fabric.

The characteristics and advantages of the invention will become apparent from the following detailed description of some preferred but not exclusive embodiments of the method according to the invention and of the textile material obtained with the method, described and illustrated in the accompanying drawings only by way of non-limitative example, wherein:
figure 1 is a partially cutout perspective view of a textile material obtained with one preferred method according to the invention;
figure 2 is a partially cutout perspective view of a portion of textile material, obtained with another preferred method according to the invention;
figure 3 is a schematic view of an apparatus for carrying out a method according to the invention;
figure 4 is a view of a different embodiment of an apparatus for carrying out a method according to the invention.

With reference to the above figures, one preferred method according to the invention substantially consists in applying, to one side of a fabric 1, a film 2 made of transparent thermoplastic material.

The transparent thermoplastic material is preferably constituted by polyethylene and, if a textile material with high fire-retardant characteristics is required, said film can be constituted by fire-retardant polyethylene.

The thickness of the film 2 is preferably between 0.02 and 0.03 mm.

The film 2 is most preferably applied to one side of the fabric 1 with heat, at a temperature that can vary according to the type and thickness of the thermoplastic material that is used but which is in any case adapted to achieve the partial softening of the film 2, and the film 2 is pressed against the fabric 1 so as to achieve a penetration of the film 2 in the meshes of the fabric 1 that makes the film 2 applied to the fabric 1 to be substantially invisible.

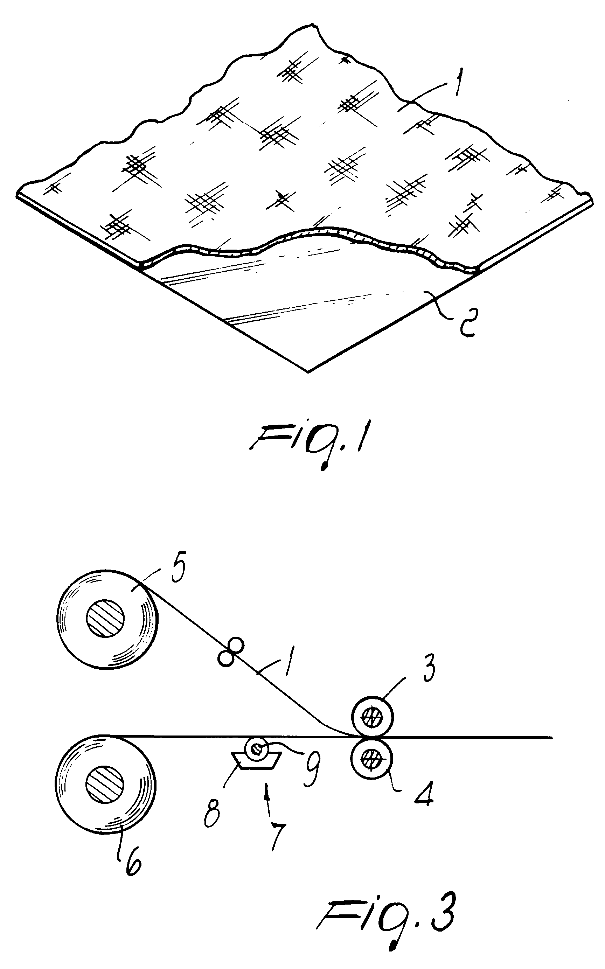

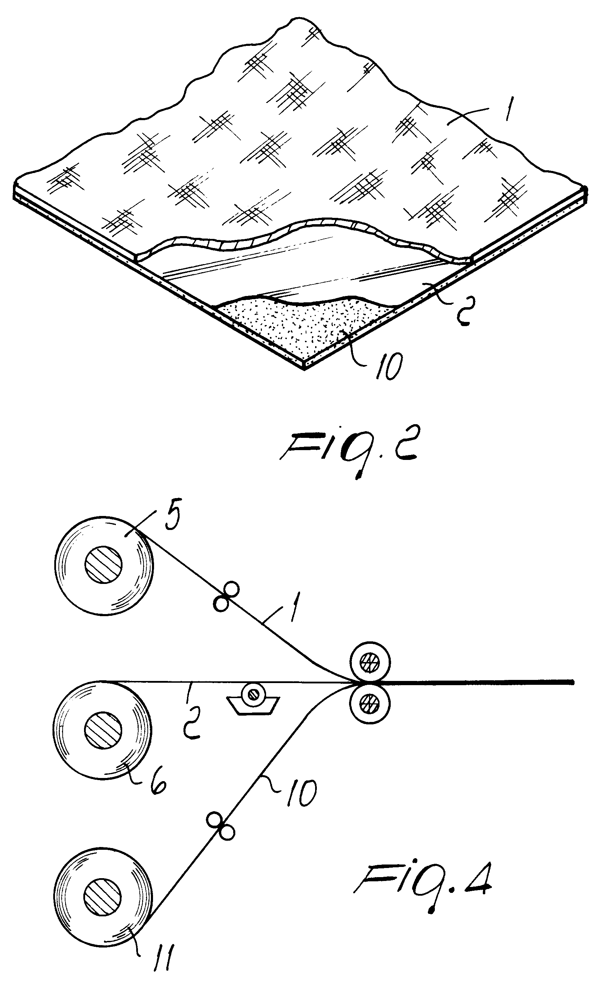

The film 2 can be applied to the fabric 1 with an apparatus, shown in figure 3, of the type currently used for pressing fabrics after their production.

More particularly, as shown in particular in figure 3, the apparatus used is substantially composed of two rollers or calenders 3 and 4 that are arranged so that their axes are mutually parallel and face each other. The two rollers 3 and 4 are actuated with a rotary motion about their respective axes and with opposite rotational directions, so as to achieve the traction of the fabric 1 and of the film 2, which are fed from corresponding winding rolls 5 and 6 and are inserted between the rollers 3 and 4.

At least one of the rollers 3 and 4 is heated, in a per se known manner, for example by means of the circulation of a heated fluid, or by means of electric resistors, so as to bring the film 2 to the desired temperature.

The two rollers 3 and 4 are pressed against each other, with a preset pressure and in a per se known manner, so that the heated film 2 is pressed against one side of the fabric 1.

Conveniently, in order to prevent the film 2 from adhering to the skirt of the roller 4 with which it makes contact, it is possible to provide a device 7 that spreads a lubricant, constituted for example by silicone oil or other non-stick substance, onto the side of the film 2 arranged opposite to the one that is meant to make contact with the fabric 1.

More particularly, the device 7 can be constituted by a lubrication basin 8 containing the lubricant and in which a spreader roller 9 rotates; the film 2 makes contact with said roller during its advancement toward the rollers 3 and 4.

According to another preferred embodiment of the method according to the invention, a layer of non-woven fabric 10 is applied to the side of the film 2 that lies opposite to the fabric 1.

The non-woven fabric 10 can be applied, as shown in figure 4, by feeding the rollers 3 and 4 not only with the film 2 and with the fabric 1 but also with the non-woven fabric 10 fed from a winding roller 11, so that between the rollers 3 and 4 the film 2 is interposed between the non-woven fabric 10 and the fabric 1.

In this manner, the heating of the film 2 and the pressure to which it is subjected during passage through the rollers 3 and 4 partially softens the film 2, which penetrates both in the fabric 1 and in the non-woven fabric 10. In practice, the film 2 made of thermoplastic material acts as an adhesive between the fabric 1 and the non-woven fabric 10.

In this case, of course, the device 7 is not used.

The textile material obtained with a method according to the invention is thus constituted by a layer of fabric 1, made of natural or synthetic fibers, obtained with conventional weaving techniques, and by a layer 2 made of a film of transparent thermoplastic material applied to one side of the layer of fabric 1 and at least partially diffused into the fibers of the layer of fabric 1 so that it is practically invisible.

If polyethylene or another fire-retardant thermoplastic material is used as transparent thermoplastic material, the textile material obtained with the method according to the invention furthermore has excellent self-extinguishing characteristics in case of fire that make it particularly suitable for those applications, such as for example in the manufacture of mattresses, in which the statutory provisions prescribe non-flammability of the materials used.

The textile material obtained with the different preferred embodiment of the method according to the invention, which provides for the additional application of a layer of non-woven fabric 10, is constituted by the layer of fabric 1 on one side and, on the other side, by the layer of non-woven fabric 10, with interposition of the layer of thermoplastic film 2 in between. This type of textile material has good mechanical strength, good waterproofing, and can be advantageously used in the manufacture of mattresses, in replacement of the covering materials currently used, which are composed of an outer layer of fabric and an inner padding layer that is coupled to the outer layer by means of a stitching operation, with the advantage of having significantly lower production costs, since the adhesion of the non-woven fabric 10 to the fabric 1 is achieved without performing stitches but simply by means of the adhesion of the interposed layer 2 of thermoplastic material.

In practice it has been observed that the method and the textile material obtained with the method according to the invention fully achieve the intended aim, since the obtained textile material has excellent mechanical strength and a good aesthetic appearance even if low-quality threads are used to produce the fabric.

Another advantage of the textile material obtained with the method according to the invention is that it can have, if required, excellent fire-retardant characteristics without requiring the use of soluble or volatile chemicals.

The method and the textile material obtained with the method, thus conceived, are susceptible of numerous modifications and variations, all of which are within the scope of the inventive concept; all the details may furthermore be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Method for improving fabrics made of natural or synthetic fibers, characterized in that it consists in applying a film (2) of transparent thermoplastic material to one side of a fabric (1), said application being performed with heat, at a temperature that is adapted to achieve the partial softening of said film, pressing said film against the fabric to achieve a penetration of the film into the meshes of the fabric.

2. The method according to claim 1, caracterized in that the penetration is such that said film applied to said fabric is substantially invisible.

3. Method according to claim 1, characterized in that said film is applied to said fabric by hot calendering.

4. Method according to claim 1, characterized in that said film has a thickness that is substantially between 0.02 and 0.03 mm.

5. Method according to one or more of the preceding claims,characterized in that said thermoplastic material is constituted by polyethylene.

6. Method according to one or more of the preceding claims, characterized in that said thermoplastic material is constituted by fire-retardant polyethylene.

7. Method according to one or more of the preceding claims, characterized in that a layer of non-woven fabric (10) is applied to the side of said film that lies opposite to said fabric.

8. The method of claim 7, characterized in that the non-woven fabric layer is applied simultaneously with the application of said film to said fabric.

9. Improved textile material, particularly suitable for mattresses, furniture, or coverings in general, characterized in that it comprises a layer of fabric (1) made of natural or synthetic fibers and at least one layer (2) made of a transparent thermoplastic film that is applied to one side of said layer of fabric, said layer of thermoplastic material being at least partially diffused in the fibers of said layer of fabric.

10. Textile material according to claim 9, characterized in that said thermoplastic material is constituted by polyethylene.

11. Textile material according to claim 9, characterized in that said thermoplastic material is constituted by fire-retardant polyethylene.

12. Textile material according to one or more of the preceding claims, characterized in that a layer of non-woven fabric (10) is applied to the side of said layer of thermoplastic material that lies opposite to said layer of fabric.

13. Textile material according to claim 12, characterized in that said layer of non-woven fabric clings, with its fibers, to said layer of thermoplastic material.
